# EUROPEAN PATENT SPECIFICATION

(11) **EP 1 818 888 B1**
(45) Date of publication and mention of the grant of the patent: **08.04.2009**
(21) Application number: 07380018.7
(22) Date of filing: 01.02.2007
(51) Int. Cl.: G08G 1/017, G08G 1/005, G07C 5/00, G07C 9/00, G06K 19/077

(54) **Smart pedestrian and vehicle detection system**
Intelligentes Fußgänger- bzw. Fahrzeug-Erfassungssystem
Système intelligent pour détecter des piétons et des véhicules

(30) Priority: 03.02.2006 ES 200602000
(43) Date of publication of application: 15.08.2007
(73) Proprietor: Ispizua Hernandez, Luis Angel, 01003 Vitoria (Alava) (ES)
(72) Inventor: Ispizua Hernandez, Luis Angel, 01003 Vitoria (Alava) (ES)
(74) Representative: Carvajal y Urquijo, Isabel

(56) References cited:
- EP-A- 1 475 753
- WO-A-97/09009
- DE-A1- 4 340 811
- DE-A1- 10 339 598

## Description

The invention is comprised within the field of safety and aid for people and vehicles by means of using a smart detection system when said people or vehicles are approaching or reach a public area or place.

### BACKGROUND OF THE INVENTION

The existence of public places, such as traffic lights, which include a device that emits sounds having certain intensity when pedestrians can cross the street so that the sound is heard by a group of disabled people, such as the blind, is known. However, this device is not effective for people who have another type of disability.

It is known from the prior art document DE-10339598-A1, disclosing an automatic information help system for disabled and partially sighted people which has information provided to user over loudspeaker, and document EP-1475753-A1 disclosing a system for remotely identifying a vehicle. However, none of this documents solve the technical problem consisting in how to obtain an automatic vehicle and pedestrian detection system, for pedestrian approaching a public area, which can detect the pedestrian/vehicle and the type of group the pedestrian belongs to and, according to this type of group performing different configurable actions.

### DESCRIPTION OF THE INVENTION

The present invention which is defined in independent claim 1 relates to a smart vehicle and pedestrian detection system, which pedestrians belong to certain groups, who are approaching or reach a public area or point. The system comprises:
- an identification card carried by the vehicle or pedestrian, internally containing an identification code with information relating to the type of group the pedestrian belongs to (the term group hereinafter refers in the case of pedestrians to different groups of people, such as tourists and the disabled, and the latter could be, for example, the blind, the physically handicapped, Alzheimer's patients, senile dementia patients, etc.), and
- a receiver having an antenna and assembled in the public area or point (the term public area or point hereinafter refers (though not limited) to some of the following: traffic light, vehicle access areas, inside a bus, bus stop, commuter train stop, unique public buildings (for example, City Hall, Council building, Hospitals, ATMs, etc.), configured to:
   - read the information recorded in the identification card relating to the type of group the pedestrian belongs to when said vehicle or pedestrian is close to the mentioned public area or point;
and according to the type of group the pedestrian belongs to and the public area or point, to
i) provide audio information to guide the person if the person is a blind pedestrian or a tourist;
ii) communicate with a remote data communication entity through a telecommunications network, indicating the identification code and information relating to the position of said receiver if the person is a disabled pedestrian suffering from Alzheimer's or senile dementia;
iii) read additional information stored in the identification card relating to a vehicle's permit to access the area and, according to said additional information, allow or deny access to said area if a vehicle tries to enter an access area where the receiver is installed.

### DESCRIPTION OF THE DRAWINGS

A figure which aids in better understanding this invention and which is expressly related to an embodiment of said invention, presented as an illustrative and non-limiting example thereof, is briefly described below.

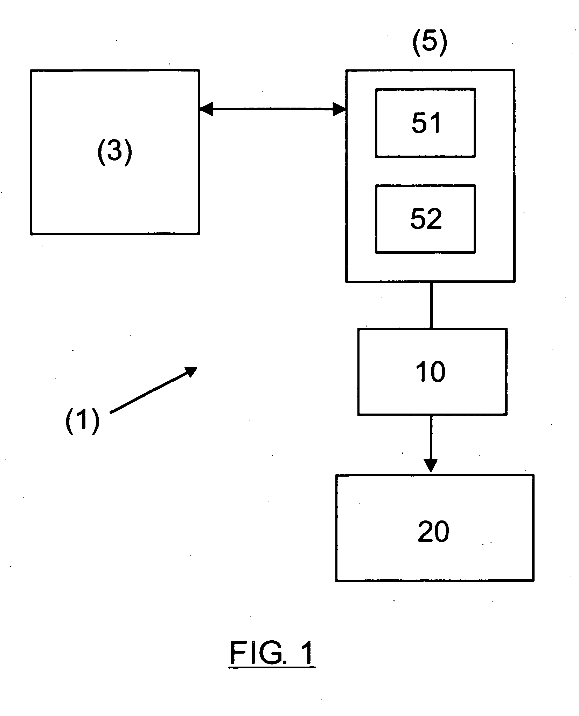

Figure 1 is a block diagram of the smart vehicle and pedestrian detection system.

### DESCRIPTION OF A PREFERRED EMBODIMENT OF THE INVENTION

Figure 1 reflects an example of the smart pedestrian detection and guidance system according to the invention.

In this embodiment, a blind pedestrian carrying an identification card (3) approaches a traffic light having a receiver (5). This card (3) may contain a pedestrian identification code, information related to the group this pedestrian belongs to; in this specific case, the code associated to this card (3) corresponds to the group of the blind. This information has been previously recorded in the identification card (3).

The mentioned identification card (3) is a passive RFID system, known as a passive TAG, which may contain a microprocessor and a small amount of memory.

When the pedestrian is detected by the receiver (5), the latter reads the information contained in the pedestrian identification code of the identification card (3), (in this case, the code that is read corresponds to the group of the blind).

This receiver (5) must include a control mechanism which decides which type of action the mentioned receiver (5) must perform according to the read information of the card (3) so that it may be detected by the pedestrian; the traffic light communicates the following information to the pedestrian through a loudspeaker, "the traffic light is red, please wait"; and then it will activate the intermittent sound allowing these disabled pedestrians to cross the street. Thus it only emits sounds when needed, eliminating the corresponding acoustic pollution.

The mentioned control mechanism decides which type of signal the receiver (5) is to emit by taking two variables, the group the pedestrian belongs to and the area where he or she has been detected, into account; it must further be programmable and adaptable to the actions to be taken according to the pedestrian.

In the particular case that the receiver (5) detects the pedestrian at night close to the traffic light and the traffic light is in a continuous flashing state, the control mechanism of this receiver (5) must activate the traffic light so that it turns red for the vehicles, allowing the pedestrian to cross, and the traffic light returns to the flashing state once the receiver (5) loses the signal associated to the card (3) carried by the pedestrian (the traffic light may be programmed to be in a flashing state if previously defined conditions are met, such as the fact that it is nighttime and later than 10 p.m., for example).

The receiver (5) is fed by connections to the electric power system. It may occur that another power source is preferred, so the receiver (5) will be provided with a battery (52), as in the event that the receiver (5) is installed inside a bus.

In the particular event that the pedestrian furthermore belong to the Alzheimer group, the receiver (5) may also send a GPRS message through an antenna (51) and a telecommunications network (10) to a remote data communication entity (20), which indicates the position of the pedestrian and the pedestrian-associated identification code. This entity (20) thus receives information corresponding to the geographic point where a certain pedestrian has passed for the purpose of enabling his or her localization in the event that the pedestrian is lost and the family of this pedestrian has filed a report.

Other features of this invention would be the following:
- Bus stops or the like. When the system (1) detects a blind pedestrian carrying a card (3) close to this public area, it will provide the pedestrian with audio information, the information possibly being the following: address where he or she is, bus or commuter train lines of this stop, next destinations, waiting time in minutes, etc.
- City Halls, outpatient clinics, etc. When the system (1) detects a blind pedestrian carrying a card (3) close to this public area, it will provide the pedestrian with information relating to the building nearby, for example.
- Strategic guidance areas. When the system (1) detects a blind pedestrian carrying a card (3) close to this area, it will indicate to the pedestrian the address he or she is at and the public points located nearby.
- Inside a bus. When the system (1) detects a pedestrian belonging to the group of the blind or to a group of tourists, it will activate the electronic voice of the panel indicating the stops in his or her language and will deactivate the sound device if another user belonging to these groups has not been detected once he or she gets off. In the event that the system (1) detects a pedestrian belonging to the group of people with Alzheimer's or senile dementia, the data contained in his or her identification card as well as the bus line in question will be sent by means of a transmission, usually GPRS, to a specific center.
- Vehicle access areas. When the system (1) detects a vehicle approaching an access area that is controlled, for example with bollards, in the event that the vehicle has permanent or yearly authorization the receiver (5), arranged for example in the ground, will read the necessary identification information carried in the card (3), arranged for example in the front part of the vehicle, and will allow or deny access, depending on the read information. For vehicles with temporary authorization, the information may be read by a vertical reader.

## Claims

1. A vehicle and pedestrian detection system, which pedestrians belong to certain groups, who approach or reach a public area or point, comprising:
- an identification card (3) carried by the vehicle or pedestrian.
- a receiver (5) having an antenna (51) and assembled in the public area or point,
**characterized in that**:
- the identification card (3) comprises an RFID tag internally containing an identification code with information relating to the type of group the pedestrian or vehicle belongs to, and
- the receiver (5) is configured to:
- read the information recorded in the identification card (3) relating to the type of group the pedestrian or vehicle belongs to when said vehicle or pedestrian is close to the mentioned public area or point;
and according to the type of group the pedestrian or vehicle belongs to and the public area or point, to
i) provide audio information through at least one loudspeaker located at the public area or point to guide the person if the person is a blind pedestrian or a tourist;
ii) communicate with a remote data communication entity (20) through a telecommunications network (10), indicating the identification code and information relating to the position of said receiver (5) if the person is a disabled pedestrian suffering from Alzheimer's or senile dementia;
iii) read additional information stored in the identification card (5) relating to a vehicle's permit to access the area and, according to said additional information, allow or deny access to said area if a vehicle tries to enter an access area where the receiver (5) is installed.

## Patentansprüche

1. Fahrzeug- und Fußgängererkennungssystem, wobei die Fußgänger zu bestimmten Gruppen gehören, die sich einem öffentlichen Bereich oder Punkt nähern oder diesen erreichen, welches Folgendes umfasst:
- eine vom Fahrzeug oder Fußgänger mitgeführte Identifizierungskarte (3),
- einen Empfänger (5), der eine Antenne (51) hat und in dem öffentlichen Bereich oder Punkt montiert ist,
**dadurch gekennzeichnet, dass**
- die Identifizierungskarte (3) ein RFID-Tag umfasst, das in seinem Inneren einen Identifizierungscode mit Information bezüglich der Art von Gruppe enthält, zu welcher der Fußgänger oder das Fahrzeug gehört, und
- der Empfänger (5) ausgebildet ist, um
- das in der Identifizierungskarte (3) gespeicherten Information bezüglich der Art von Gruppe, zu welcher der Fußgänger oder das Fahrzeug gehört, zu lesen, wenn das genannte Fahrzeug oder der Fußgänger sich in der Nähe des erwähnten öffentlichen Bereichs oder Punkt befindet;
und entsprechend der Art von Gruppe, zu welcher der Fußgänger oder das
Fahrzeug gehört, und des öffentlichen Bereichs oder Punkts, um
i) Audioinformation über zumindest einen an dem öffentlichen Bereich oder Punkt angeordneten Lautsprecher zu liefern, um die Person zu führen, wenn die Person ein blinder Fußgänger oder ein Tourist ist;
ii) mit einer Datenfernübertragungseinheit (20) über ein Telekommunikationsnetz (10) zu kommunizieren, unter Angabe des Identifizierungscodes und der Information bezüglich der Position des genannten Empfängers (5), wenn die Person ein behinderter Fußgänger ist, der an Alzheimer oder seniler Demenz leidet;
iii) zusätzliche in der Identifizierungskarte (5) gespeicherte Informationen bezüglich der Erlaubnis eines Fahrzeugs, den Bereich zu betreten, zu lesen, und entsprechend der genannten zusätzlichen Informationen das Betreten des genannten Bereichs zu gestatten oder zu verweigern, wenn ein Fahrzeug versucht, einen Zutrittsbereich zu betreten, in welchem der Empfänger (5) installiert ist.

## Revendications

1. Système de détection de véhicules et de piétons, lesdits piétons appartenant à certains groupes, qui s'approchent de ou atteignent une zone ou un point publique, comprenant :
- une carte d'identification (3) portée par le véhicule ou le piéton,
- un récepteur (5) ayant une antenne (51) et étant monté dans la zone ou le point public,
**caractérisé en ce que**
- la carte d'identification (3) comprend une étiquette RFID contentant internement un code d'identification avec de l'information concernant le type de groupe auquel appartient le piéton ou le véhicule, et
- le récepteur (5) est configuré pour :
- lire l'information enregistrée dans la carte d'identification (3) concernant le type de groupe auquel appartient le piéton ou le véhicule lorsque ledit véhicule ou piéton est près de ladite zone ou ledit point public ;
et, selon le type de groupe auquel appartient le piéton ou le véhicule et la zone ou le point public, pour
i) fournir de l'information audio à travers au moins un haut-parleur situé dans la zone ou le point public pour guider la personne s'il s'agit d'un piéton aveugle ou un touriste ;
ii) communiquer avec une entité de communication de données distante (20) à travers un réseau de télécommunications (10) indiquant le code d'identification et l'information concernant la position dudit récepteur (5) si la personne est un piéton handicapé souffrant de la maladie d'Alzheimer ou d'une démence sénile ;
iii) lire de l'information additionnelle stockée dans la carte d'identification (5) concernant l'autorisation d'un véhicule pour accéder à la zone, et selon ladite information, permettre ou refuser l'accès à ladite zone si un véhicule essaie de pénétrer dans une zone d'accès où le récepteur (5) est installé.
